# EUROPEAN PATENT SPECIFICATION

(11) **EP 4 466 118 B1**
(45) Date of publication and mention of the grant of the patent: **03.12.2025**
(21) Application number: 22826809.0
(22) Date of filing: 14.12.2022
(51) Int. Cl.: B25J 9/10, B25J 15/00, B25J 15/02, B25J 15/08, B25J 15/06

(54) **A ROBOTIC GRIPPING DEVICE**
ROBOTISCHE GREIFVORRICHTUNG
DISPOSITIF DE PRÉHENSION ROBOTIQUE

(30) Priority: 18.01.2022 DK PA202270022
(43) Date of publication of application: 27.11.2024
(73) Proprietor: The Gripper Company Aps, 9400 Nørresundby (DK)
(72) Inventor: HJØRNET, Preben, 9400 Nørresundby (DK); NIELSEN, Kim, 9400 Nørresundby (DK)
(74) Representative: AWA Denmark A/S
(86) International application number: PCT/DK2022/050281
(87) International publication number: WO 2023/138741

(56) References cited:
- WO-A1-2020/072813
- WO-A1-2021/153967
- CN-A- 112 621 796
- JP-A- 2021 171 913
- US-B1- 9 782 902
- US-B2- 9 132 555
- LONG KANG ET AL: "Design and implementation of a multi-function gripper for grasping general objects", INSPEC, THE INSTITUTION OF ELECTRICAL ENGINEERS, STEVENAGE, GB, 1 December 2019 (2019-12-01), XP002808534
- DATABASE INSPEC [online] THE INSTITUTION OF ELECTRICAL ENGINEERS, STEVENAGE, GB; December 2019 (2019-12-01), LONG KANG ET AL: "Design and implementation of a multi-function gripper for grasping general objects", XP002808534, Database accession no. 20640660
- APPLIED SCIENCES MDPI SWITZERLAND, vol. 9, no. 24, 4 December 2019 (2019-12-04), ISSN: 2076-3417, DOI: 10.3390/APP9245266

## Description

The present disclosure relates to a robotic gripping device comprising a base part, and at least one finger, said finger comprising an inner link, said inner link being rotatable relative to the base part via a first joint, and an outer link, said outer link being rotatably connected by a proximal end thereof to the inner link via a second joint, the outer link carrying an abutment part at a distal end thereof, an elongated flexible tension element being attached to the outer link between the proximal end and the distal end thereof, a first force device being provided for applying tension to the tension element, the robotic gripping device being adapted to grip an item at a front end of the robotic gripping device.

Robotic gripping devices are used for gripping an article or workpiece and for such use the robotic gripping device is e.g. mounted on a robot arm for the gripping device to be moved e.g. from a pick-up place to a put-down place for picking up an article or workpiece at the pick-up place and putting the article or workpiece down at the put-down place.

A robotic gripping device of the above art is known from WO 2021/153967 A1 which discloses a robot gripper comprising a number of finger assemblies, each finger assembly comprising a main frame or inner link, a band part, and a tip part or outer link, a finger driving part being provided for moving/rotating the main frame and a band driving part being provided for pulling the band part to rotate the tip part. The band part is tensioned or pulled to move the tip part into abutment against an article to be gripped and the band part may itself abut on the article to be gripped to assist in the gripping. The finger driving part is a worm gear drive provided for adjusting the position of the main frame or inner link between different forward positions at different angles relative to a centre axis or centre plane.

Other robotic gripping devices are e.g. known from US 7 168 748 B2, US 9 132 555 B2, US 9 782 902 B1, and WO 2020/072813 A1.

The object of the present disclosure is to provide a robotic gripping device that is i.a. adapted to operate in a relatively confined space.

This is obtained by a robotic gripping device as mentioned by way of introduction wherein the robotic gripping device is configured for the inner link to be rotatable between a retracted position thereof in which the second joint is positioned rear of the first joint relative to the front end, and an extended position thereof, preferably defined by an abutment, in which extended position the second joint is positioned in front of the retracted position thereof, relative to the front end of the robotic gripping device; the outer link is configured to rotate relative to the inner link via the second joint between an extended position of the outer link remote from a longitudinal centre axis and a retracted position of the outer link closer to the centre axis; a second force device being provided for loading the outer link to rotate towards the extended position thereof; and a third force device being provided for loading the inner link to rotate towards the retracted position thereof. Positioning the inner link in the retracted position as an initial position limits the overall width of the gripping device prior to gripping an article or a workpiece, further, the flexibility of the tension element allows the outer link to yield in case of impact against an object on an outer side or far side of the outer link relative to the longitudinal centre axis. Thereby the robotic gripping device of the present disclosure is suited for operating in a confined space.

Due to the presence of the second force device the tension element need not be able to transfer pressure but only pulling forces to the outer link. Thus, in an embodiment the tension element is a pliable element. Such element is substantially not able to transfer pressure in a longitudinal direction thereof. Pliable elements substantially not able to transfer pressure in a longitudinal direction thereof are well-known in the art and comprises chains, belts, etc.

The tension element is in some embodiments inextensible and in other embodiments the tension element is elastically extensible.

In some embodiments, the first force device is attached to or comprises a flexible element comprising a first end attached to the first force device; and a second end slidable along part of the first force device, wherein the first end and the second end are connected by an elastic element, such elastic element introduced elastic tolerance in the chain of force transferring elements extending from the distal end of the outer link to the first force element, proper.

In a practical embodiment the first force device comprises a linear actuator, preferably a cylinder, and more preferably a pneumatic cylinder. Using a linear actuator facilitates using in a further embodiment a single first force device for applying tension to the outer link of more fingers in an embodiment comprising more fingers, e.g. two, three, or four fingers, preferably spaced around the longitudinal centre axis.

In a further embodiment the first force device comprises a first stage adapted to apply tension to the tension element, and optionally a second stage extendable relative to the first stage.

In an embodiment wherein the linear actuator at a front end thereof is provided with a catching device, preferably a suction cup, further preferably attached to a vacuum source. Applying a second stage extendable relative to a first stage provides for extending the catching device for an initial catching or grasping an article or workpiece and retracting said article or workpiece prior to gripping the article or workpieces by means of the finger(s).

In yet a further embodiment the first force device comprises an elastic element, such as a bellows, attached at a first end thereof to the first stage, said elastic element being attached at a second end thereof to the tension element. The elastic element provides i.a. for an at least initially yielding grip and thus a gentle grip on an article or a workpiece being gripped.

In some embodiments, the first force device is attached to or comprises a flexible element, like a bellows, comprising a first end attached to e.g. the mentioned first stage; and a second end slidable along part of the first force device, e.g. said first stage, wherein the first end and the second end are connected by an elastic element, such elastic element introduced elastic tolerance in the chain of force transferring elements extending from the distal end of the outer link to the first force element, proper. In such embodiment the elongated flexible tension element may e.g. be provided as an inextensible element.

In a practical embodiment the second force device comprises a second elastic member, such as a spring, urging the outer link towards the extended position thereof relative to the inner link. Hereby a simple solution is obtained for urging the outer link towards the extended position thereof relative to the inner link.

In an embodiment third force device comprises a third elastic element, such as a spring, urging the inner link towards the retracted position thereof.

In an embodiment the third force device comprises an elongated flexible second tension element attached by one end thereof to the inner link and attached by a second end thereof to the first force device, preferably at a point of attachment of the first tension element to the first force device. Hereby a simple construction is obtained in that the first force device activates the third force device which in a most simple further embodiment may consist of the elongated flexible second tension element.

In a further practical embodiment the inner link comprises a distal end thereof at the second joint, an intermediate position at the first joint, and a proximal end extending opposite the distal end relative to the intermediate position, said second tension element contacting an extreme end of the proximal end or/and a rear side of the proximal end relative to the front end of the robotic gripping device, and wherein preferably the second tension element is attached to the inner link at a second intermediate position thereof between the first intermediate position and the distal end of the inner link.

In an embodiment a guide element is provided for guiding the first tension element between the outer link and the first force device. Hereby a simple provision for establishing the geometry of the mechanism of the device is obtained.

In practical embodiments the abutment part at the distal end of the outer link comprises at least one of: A friction surface, elastic abutment pad; a friction surface, rigid abutment; and a suction cup, preferably connected to a vacuum source. Hereby different abutment parts may be applied for different gripping tasks. Friction surfaces may include material providing gecko-like grips, i.e. materials imitating the grip provided by the feet of a gecko. Using suction cups connected to a vacuum source provided for an active grip not depending on the abutment part being pressed against the article or workpiece being gripped.

According to the present disclosure a method of operating a robotic gripping device according to present disclosure, comprises the steps of:
moving the inner link to the retracted position thereof;
approaching the robotic gripping device to an article or workpiece to be gripped;
moving the inner link to the extended position thereof; and
moving the outer link towards the retracted position thereof.

Further, according to the present disclosure a method of operating a robotic gripping device according to the present disclosure wherein the linear actuator at a front end thereof is provided with a catching device, preferably a suction cup, further preferably attached to a vacuum source, comprises the steps of:
moving the inner link to the retracted position thereof and
extending the catching device of the linear actuator in front of the finger(s) of the robotic gripping device;
approaching the robotic gripping device to an article or workpiece to be gripped;
initially grasping the article or workpiece by means of the catching device;
retracting the catching device;
moving the inner link to the extended position thereof; and
moving the outer link towards the retracted position thereof.

**In** the following the disclosure will be elaborated in further details by way of examples of embodiment having reference to the drawings, in which
Fig. 1 is a sectioned view of a robotic gripping device according to the present disclosure in a first, open position;
Fig. 2 is a sectioned view of the gripping device of Fig. 1 in a second, open position;
Fig. 3 is a sectioned view of the gripping device of Fig. 1 in a third, intermediate position;
Fig. 4 is a sectioned view of the gripping device of Fig. 1 in a fourth, intermediate position;
Fig. 5 is a sectioned view of the gripping device of Fig. 1 in a fifth, closed position;
Fig. 6 shown the gripping device of Fig. 1 obliquely from the front end thereof and in an intermediate position;
Fig. 7 shows another embodiment of a robotic gripping device according to the present disclosure;
Fig. 8 shows a vertical section or the gripping device of Fig. 7;
Fig. 9 shown yet another embodiment of a robotic gripping device according to the present disclosure; and
Fig. 10 shows the gripping device of Fig. 9 seen from the front end thereof.

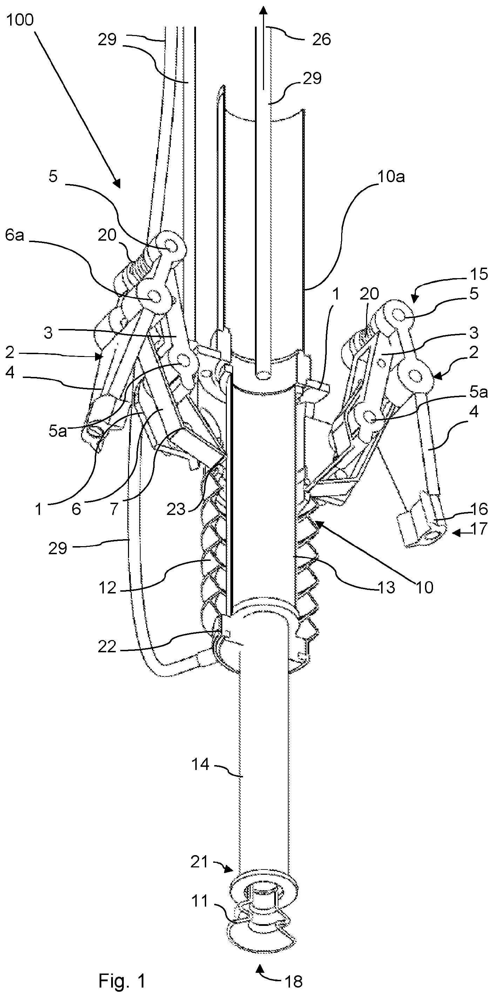

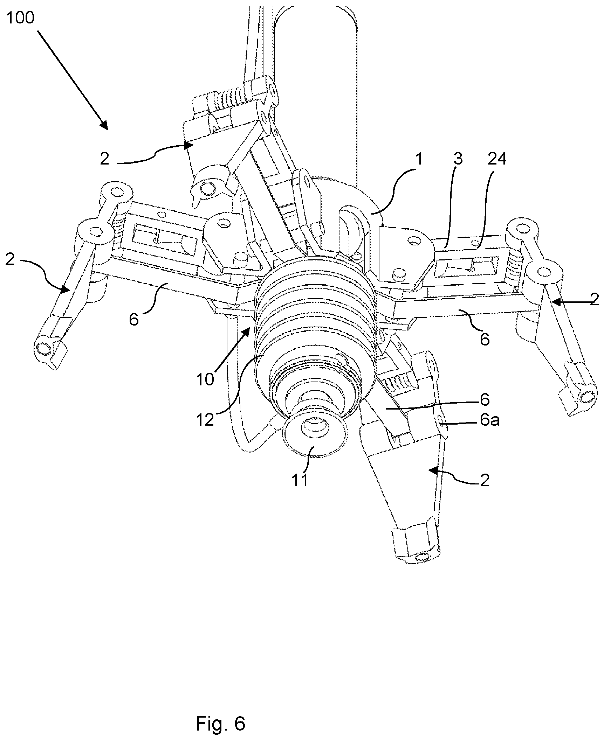

Referring to Figs. 1 to 6, in an embodiment a robotic gripping device 100 comprises a base or base part 1, and a number of fingers 2, e.g. four fingers as shown e.g. in Fig. 6. In the present embodiment each finger 2 comprises an inner link 3, that is rotatable relative to the base part 1 via a first joint 5a; and an outer link 4, that is rotatably connected by a proximal end 15 thereof to the inner link 3 via a second joint 5. The outer link is carrying an abutment part 16 at a distal end 17 thereof. An elongated flexible and pliable tension element e.g. a pull-belt 6 is attached to the outer link 4 at an attachment point 6a between the proximal end and the distal end thereof. A first force device 10, e.g. comprising a linear actuator, especially a cylinder, and in the specific embodiment a pneumatic cylinder 10a is provided for applying tension to the tension element or pull-belt 6. The robotic gripping device 100 is adapted to grip an item at a front end 18 of the robotic gripping device, the front end being thus defined.

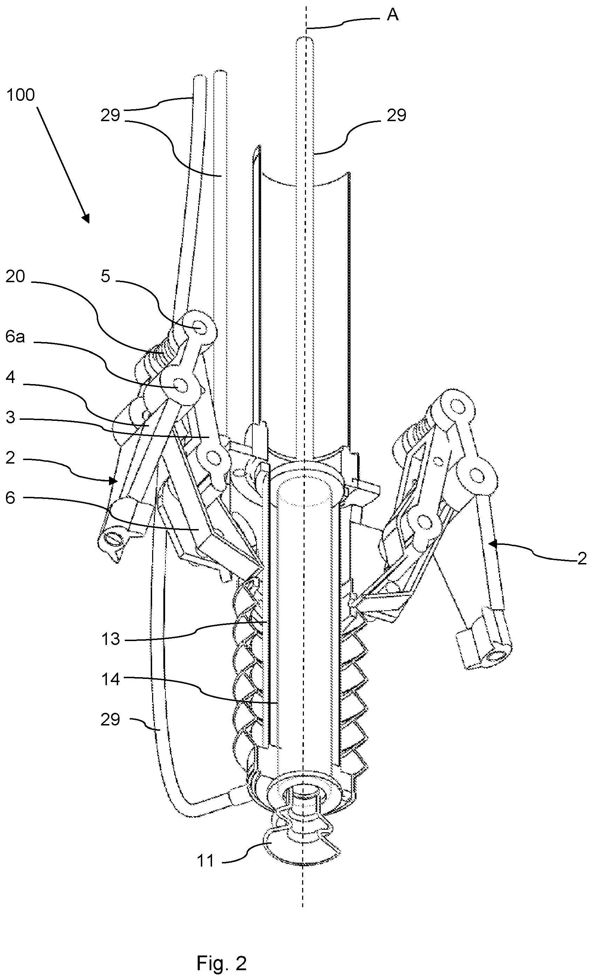

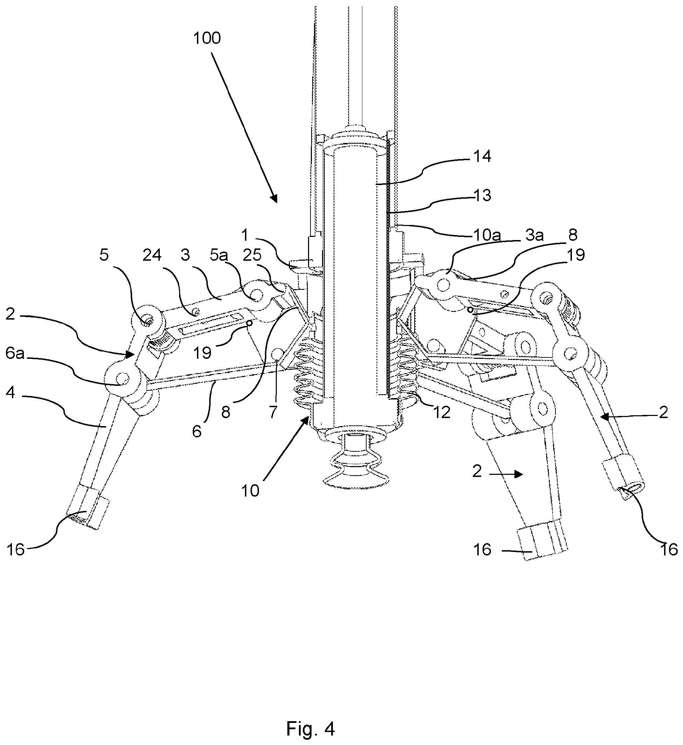

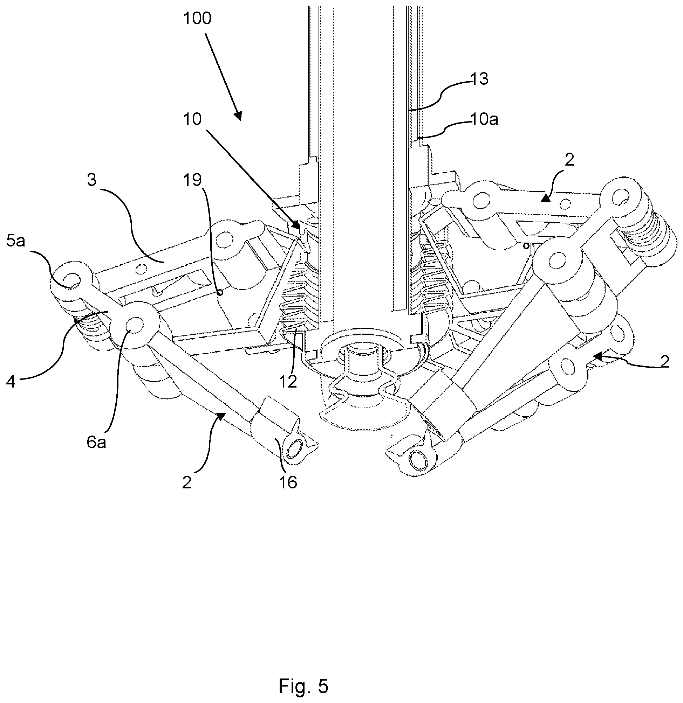

The robotic gripping device 100 is configured for the inner link 3 to be rotatable between a retracted position shown in Figs. 1 and 2 in which the second joint 5 is positioned rear of the first joint 5a relative to the front end 18, and an extended position shown e.g. in Figs. 4 and 5, which in the present embodiment is defined by an abutment 19. In extended position the second joint 5 is positioned in front of the second joint's position in the retracted position of the inner link 3, relative to the front end of the robotic gripping device 100. The outer link 4 is configured to rotate relative to the inner link 3 via the first joint 5a between an extended position of the outer link 4 remote from a longitudinal centre axis A shown e.g. in Fig. 4, and a retracted position of the outer link 4 closer to the centre axis as shown e.g. in Fig. 5. A second force device is provided for loading the outer link 4 to rotate towards the extended position thereof, which second force devise in the present embodiment is a coiled torsion spring 20. A third force device, to be explained below, being provided for loading the inner link 3 to rotate towards the retracted position thereof.

As mentioned above, in the present embodiment the first force device 10 comprises a linear actuator in the form of a pneumatic cylinder 10a.

Further, in the present embodiment the pneumatic cylinder 10a comprises a first stage 13 adapted to apply tension to the tension element or pull-belt 6, and in the present embodiment also a second stage 14 extendable relative to the first stage 13 as shown e.g. by comparison of Figs. 1 and 2.

Further, in the present embodiment the second stage 14 of the pneumatic cylinder at a front end 21 thereof is provided with a catching device or initial grasping device, which in the present embodiment is a suction cup 11, that in the present embodiment is attached to a vacuum source (indicated by arrow 26).

In the present embodiment the first force device comprises an elastic element, in the form of a bellows 12, which at a first end 22 is attached to the first stage 13, and at a second end 23 is attached to the tension element or pull-belt 6.

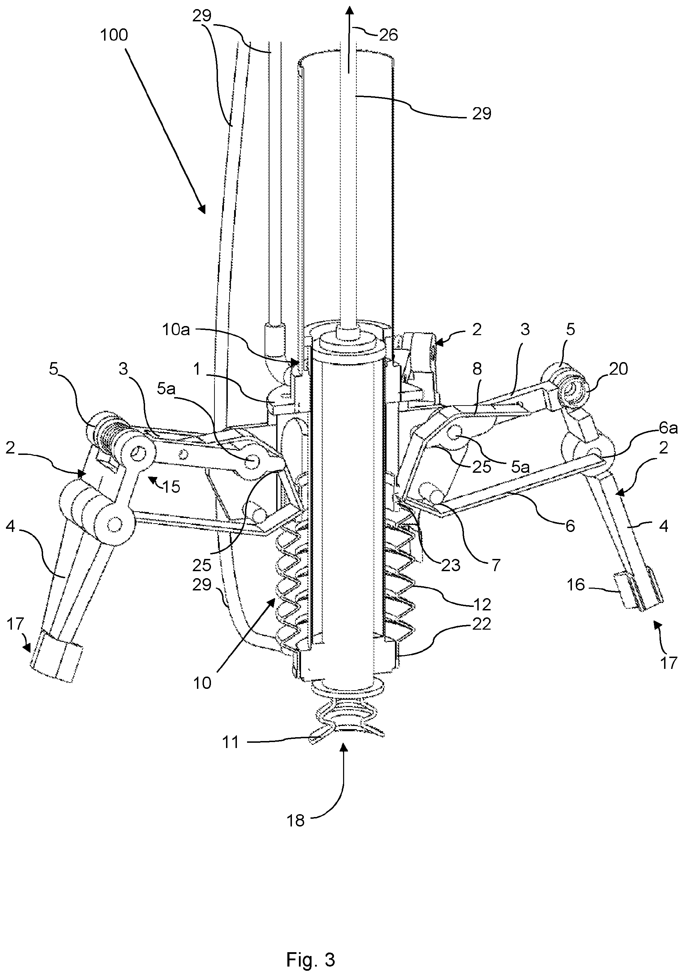

As mentioned above, in the present embodiment, as shown e.g. in Fig. 3 the second force device comprises a second elastic member in the form of the coiled torsion spring 20, urging the outer link 4 towards its extended position relative to the inner link 3.

Whereas the third force device may comprise a third elastic element, such as a spring, urging the inner link 3 towards its retracted position, in the present embodiment the third force device comprises a elongated flexible second tension element or second pull-belt 8, which in the present embodiment is attached by one end thereof to the inner link 3 by means of a pin 24 and is attached by a second end thereof to the second end 23 of the bellows 12.

In the present embodiment the inner link 3 comprises a distal end thereof at the second joint 5, an intermediate position at the first joint 5a, and a proximal end extending opposite the distal end relative to the intermediate position, wherein the proximal end has an extreme end 25. The second tension element or second pull-belt 8 is contacting the extreme end 25 or/and a rear side 3a of the proximal end. It should be understood that the rear side 3a is rear relative to the front end 18 of the robotic gripping device 100. Further, in the present embodiment the second tension element or second pull-belt 8 is attached to the inner link, at a second intermediate position of the inner link between the first intermediate position and the distal end of the inner link 3, by means of the pin 24.

In the present embodiment a guide element 7 is provided for guiding the first tension element or first pull-belt 6 between the outer link 4 and the first force device 10. The guide element may be provided by a shaft or second pin 7 e.g. carrying a tube piece rotatable around the second pin for reducing friction relative to movement of the first pull-belt 6.

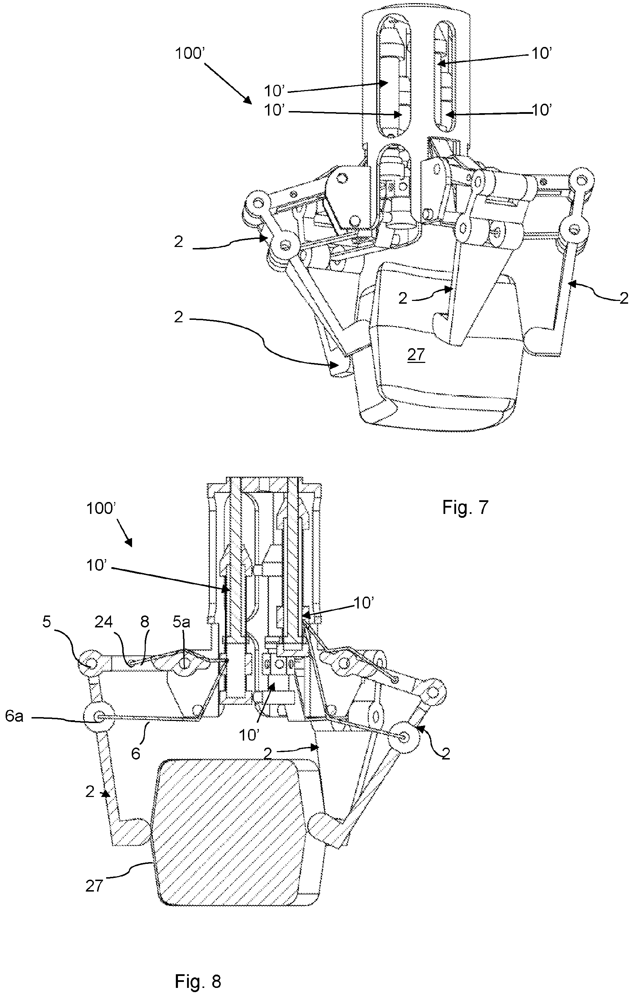

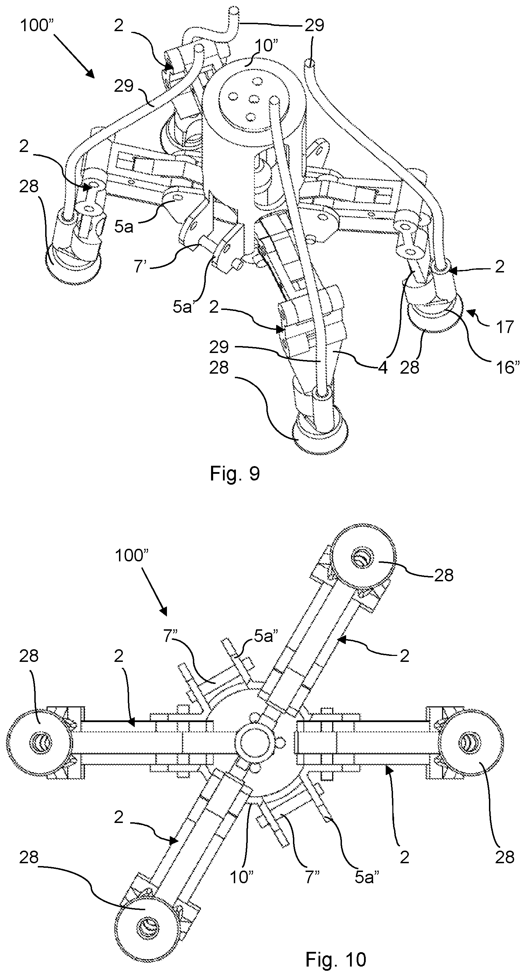

The abutment part 16 at the distal end 17 of the outer link 4 may comprise e.g. an elastic abutment pad with a friction surface to provide friction against an article or a workpiece 27 (see Figs. 7 and 8) to be gripped; a rigid abutment with a friction surface to provide friction against an article or a workpiece to be gripped; or a suction cup 28 (see Figs. 9 and 10), preferably connected to a vacuum source.

Pneumatic hoses 29 are provided for providing the cylinder stages, suction cups, etc. with pressurized air and/or vacuum as it is known in the art and as the skilled person will appreciate.

Following the succession of Figs. 1 to 6, Fig. 1 shows the gripping device 100 in an initial position, the second stage 14 and the suction cup 11 extended ready to initially catch an article or workpiece (not shown) by suction. In this initial position the fingers 2 are in a retracted position.

Fig. 2 shows the gripping device 100 in a second position in which the second stage 14 has been retracted while the fingers 2 are still in their retracted position. An article or work piece initially caught by the suction cup 11 would at this time be ready to be gripped by the fingers 2.

Fig. 3 shows the gripping device 100 in a third position in which a retraction of the first stage 13 has been initiated thereby further retracting the suction cup 11 and raising the bellows 12 whereby, due to the upper ("upper" due to the position shown) second end 23 of the bellows 12 is raised thereby pulling the first pull-belt 6 and slacken the second pull-belt 8. This causes the inner link 3 of the finger 2 to move towards an extended position and causes eventually the outer link 4 to move towards the centre axis A.

Fig. 4 shown the gripping device 100 in a fourth position in which the first stage 13 has been further retracted compared to the third position and inner links 3 have reached their extended position defined by the abutments 19.

Fig. 5 shows the gripping device 100 in a fifth position in which the first stage 13 has been still further retracted. The second end 23 of the bellows 12 has been moved upwards thereby, but due the flexibility of the bellows 12 the second end 23 thereof does not exactly follow the movements of the first stage 13. The outer links 4 of the fingers 2 have been pulled further towards the centre axis A whereby an article or workpiece initially caught or gripped by the suction cup 11 would have been securely gripped by the abutment parts 16.

Fig. 6 shows the gripping device 100 in a position similar to the position shown in Fig. 3 but seen from below whereby it is clearly seen that this embodiment comprises four fingers.

Figs. 7 and 8 show a robotic gripping device 100' which is a variant of the embodiment shown in Figs. 1 to 6. Like features are indicated by like numbers and variant features are indicated by like number with the addition of an apostrophe. The gripping device 100' is provided with a respective first force device (pneumatic cylinder) 10' for each finger 2, thereby providing for controlling each finger independently. It is noted that in this embodiment the gripping device is not provided with an extensible second stage or with a suction cup for making an initial grasp or grip, but such an extensible second stage and/or suction cup would be an option.

Figs. 9 and 10 show a robotic gripping device 100" which is a variant of the embodiment shown in Figs. 1 to 6. Like features are indicated by like numbers and variant features are indicated by like number with the addition of a doble apostrophe. The gripping device 100" comprises abutments 16" with end of finger suction cups 28 at the distal ends of the outer links 4.

Like the embodiments shown in Figs. 1 to 8, the embodiment of Figs. 9 and 10 are provided with four fingers 2. In the embodiment shown the fingers 2 are having irregular mutual angular distances, in the embodiment shown of alternatingly 30° and 60°.

It is noted from Figs. 9 and 10 that the base part 10" in this embodiment is provided with two "empty" first joints 5a" with guide elements 7". Thus, this base part 10" provided for constructing the gripping device with another number and/or another configuration of the fingers, e.g. three finger may be provided, e.g. with an even angular distribution around the centre axis.

The present disclosure regards methods and devices for grasping and un-grasping workpieces. The shown representative embodiments comprise gripping devices or grippers containing two and beyond fingers 2 around one or more actuators 10a that operates mandatory fingers 2, that shares the common base or base part 1. A finger 2 consists, in its essence of an open kinematic articulated chain with at least two links 3, 4 and one joint 5. In the present embodiments, the base 1 is the attachment origin for mounting the device to a device manipulator or a fixed structure. Finger actuation can be shared among two or more, even all fingers 2, or be individual. To actuate the closing action one link, i.e. outer link 4 in the present embodiments, is attached via a flexible, say bendable, optionally elastic, pull string, e.g. the first pull-belt 6, to an or the actuator 10a, shared or individually, whereby driving the actuator 10a in one, say upward direction (as indicated by the succession Fig. 5 to Fig. 6 to Fig. 7, the forward end of the gripping device 100 pointing downwards), and transferring a pull force to the pull-belt 6 will drive the finger 2 in inward towards an attachment point at the actuator 10a, optionally around the second pin or shaft 7, optionally with a roller mounted on the shaft, e.g. in the form of a tube piece a rotatable around the shaft 7, for minimizing wear, say towards the centre axis A of the gripping device, say closing motion path defined by the kinematic structure of the finger 2 and the positioning for the pull-belt 6. To generate an opening action the joint 5 between at least the outer link 4 and the next link back in the chain, in the present embodiments the inner link 3, may be preloaded, say spring loaded, e.g. via spring 20, that drives the outer link 4 outwards for the gripping device to open. All joints 5, 5a could be preloaded this way to further invoke a predefined opening behaviour. Additionally, one link in the chain, in the present embodiment inner link 3, could be connected via a second pull-belt, in the present embodiment the second pull-belt 8. Such secondary backward, say opening pull-belt 8 linked to the same or a separate actuator 10a and would be following on the outer perimeter (surface) of the finger links, so when actuated generates a pull force that will open the articulated finger kinematic structure, retracts the finger structure so the inner link 3 of the fingers is pulled in an opening direction, say backward. Additionally, when actuating the individual or all finger(s) 2 whereby the primary/closing pull-belts 6 are linked to the same actuator 10a, the closing pull-belt 6 can be dimensioned to in a final opening stage, close the outer link(s) 4 when the actuator 10a is driven in a reverse, say backward, say downward (as shown in the figures), say opening direction, resulting in the joint 5 to be closed so the finger kinematics structure are pulled back and close (Fig. 1 and 2) providing the most compact configuration and hereby the most clearance around the gripping device when manipulated. This is particularly valuable when the gripping device operates in a confined space and desires as much clearance long the gripping attack direction as possible. The finger driving actuator 10a, say a linear actuator, say a linear pneumatic/hydraulic/electromechanical actuator, or combinations of such, may beneficially be equipped with an additional gripping mechanism, say initial grasping device, exemplary a suction cup 11 as shown in the present embodiments. This is particularly beneficial in application context when the workpiece in its initial grasping pose and surrounding does not provide sufficient clearance for the fingers to be closed around the workpiece to fulfil a clamping grasp. Additionally, in such context, the actuator stroke can be extended beyond the working envelope of the finger actuation, by either stretchable belts, and /or a sliding/ or elastic, say a bellows 12 around the linear actuator 10a, allowing the actuator to move beyond and extended stroke, so the gripper device or arrangement can be kept clear of collision with the workpieces surroundings, say neighbouring parts and/or container, say tote or box, while the initial grasping device, say suction cup, is intercepted with the workpiece and actuated to provide an initial and sufficient grasping force to be able to pull the workpiece out of the confining surroundings, say upward and free, so there are generated sufficient clearance around the workpiece for the fingers to be close around it, and providing additional grasping force. This is particularly beneficial when the gripping device is attached at the tool connecting point of a robotic manipulator, as it by the additional grasping force will secure the workpiece additionally to the initial and less securing grasping device, say suction cup, and allow the robotic manipulator or arm to move with higher dynamics than the initial grasping device will secure. In the simpler case, say grasping workpiece that do not involve an initial grasping device, say picking objects from a fixed surface, or moving conveyor, where the clearance around the workpiece is sufficient for the fingers to be closed without further action, the actuator(s) may solely act as a finger drive. Once the finger arrangement has secured the workpiece via its clamping, it is an option to release the initial grasp as it may not be needed for the forthcoming manipulation and placement, and hereby save both energy and allow the force balancing between the clamping fingers to even out, and work freely while manipulating the clamped workpiece. Additionally, this will also save energy required to actuate the initial grasping device, say suction cup.

The fingers may be equipped with a tip structure and or specific material compound that is optimized to provide appropriate mechanical friction when intercepting and interaction in terms of soft force surface pressure distribution and optimal friction to achieve a desired contact with the workpiece in terms of shear and surface pressure applied to the workpiece. Such fingertip may be designed to extend beyond length and/or width of the core finger link, to achieve better touch with the workpiece. The deflection capability of e.g. an elastomer based fingertip can be designed to optimize the impact forces when the finger intercepts with the workpiece and influence attachment surface area in terms of deflecting the shape to reflect the surface structure of the interfacing workpiece surface, evening out the contact pressure and maximizing the area which are getting in contact with the workpiece to be held. Additionally, such fingertip may be designed with a surface structure that adds static friction to maximize the shear forces. This basically embodies a soft link to the fingertip. In a more exhaustive embodiment this could be implemented as an articulated rotary/spheric joint optionally combined with a similar soft structural design to achieve even higher level of compliance with the workpiece surface.

The actuator can in some embodiments be a chain of linear motion actuators, say a telescopic pneumatic cylinder with at least two stages/pistons, where the finger actuation is connected to an upper piston stage, such as the first stage 13 of the embodiment shown in Fig. 1, and a second, or even series of piston operates freely and separately to the benefit of addition even more clearance for the gripper arrangement to extend the reach and, say dive in to a confined space, say tote, having an initial grasping device attached to the end of this series of pistons, to accomplish the initial grasp and pickup stage clearance sufficient for successively the fingers to be closed around the workpiece, when the stage/piston to which the pull-belts are attached.

One benefit of the telescopic arrangement, e.g. as shown in Figs. 1 and 2 is that this frees up working envelope for the robotics arm to which the gripper is attached when approaching and grasping the workpiece, evenly when the pieces is to be placed during release, and additionally positions the workload closer to the Tool Centre Point (TCP) of the robotics arm, so it can move more freely and with higher dynamics due to the less load generated to the robotics arm structure and joints, or the fixed structure when successive processing is applied. State of the art arrangements with a fix length stick with a suction cup to the end, can be shown to have significant drawbacks in terms of reduced reach/workspace and dynamic range, as the payload generated by both the elongated gripper stick structure and the mass of the workpiece, are located longer away from the robot manipulators Tool Centre Point/ attachment point for the arms gripping/processing device. As the ability to manipulate the grasped workpiece once grasped to another displaced place location with the highest achievable dynamic/in shortest time, to obtain the highest throughput of a robotics pick and place system is predominately limited by the gripping device's ability to withstand the outer forces (on top of gravity) generated when cruising from the pick location to the place location, it is of performance dominating essence that the gripping device can allow the robot manipulator to move at its maximum speed and acceleration without being limited by the lack of holding force of the grasp. This is commonly recognized as the perhaps most significant performance limiting factors of such pick and place robotics systems, and has yet to be solved or improved, and the present disclosure does provide improvement in this respect which has been targeted as one of its key performance indicators. Equally the ability to span over an unprecedented spectrum of shapes, surface and sizes for the workpieces is a key performance indicator for such pick and place gripping devices, especially when it comes to piece handling in warehouse, logistics and equivalent value networks, where the variety of workpieces is significant for the attractiveness of the technical solution. Also in this respect the present disclosure provided improvement relative to prior art.

The working envelope, number of and arrangement positioning of the fingers influences the size and shape restriction of the grasping capabilities. Payload is restricted by the pull-force transferred to the fingers, the interacting contact physics between the fingertips and the other forces generated on the workpiece, additional to gravity, when manipulated by a robotics arm, if any. In its simple embodiment where the fingers are sharing the same actuator, say a single pneumatic cylinder, the fingers comprise a interlace grasp. As the finger actuation, especially in the present embodiments, is transferred by a belt that ideally can only transfer pull force in the belts direction the underactuated arrangement implies a self-compliant feature that is beneficial in the sense that should the fingers unintended or by means of a desired grasping pose imply interference with surrounding obstacles they will simply deflect since the belt will allow force to be compensated and balanced in the perpendicularly direct along the belt section connected to the outer link of the finger arrangement. Hereby the fingers will not be unintended loaded with undesired forces as will not the object surface that the finger is interfering with. Only the insignificant mass of the finger chain and optionally the impact of the pre-loading of one or more other links will generate impact force. Hereby the gripper will act more gentle to the interacting surroundings and be less vulnerable to such unintended collisions, leaving the overall system to be more robust and gentle in less predictable settings, like vision guided piece picking of random objects/workpieces , from a bin or tote.

In some circumstance the picking workpiece is not suitable for a grasping technique that relies on applying a clamping force to the surface of the workpiece in its initial location, rather and preferable an initial picking force, say suction based force is applied to the free, say upper accessible surface of the workpiece. This is known today predominantly to be achieved by having an arrangement of one or more suction cups that can be actuated either together or individually to ensure sealing between the workpiece surface and the suction cup. In contexts where the gripper must fulfil grasping of a combination/mix of workpieces with varying physical characteristics in subsequent work cycles, best case, without gripper exchange, the present disclosure proposes an arrangement and method where one or more fingertips are comprising an end of finger suction cup, or other initial picking force generating device, that can safely by means of the self-complacent characteristic of the belt drive arrangement, be positioned compliantly, with minimum impact forces applied to the surface of the workpiece grasping surface, that may be odd-shaped and or tilted relative to the gripper system angle of attack when approaching the workpiece to be grasped. This eases up the pose planning and accuracy requirements in general since only the minimized/insignificant counter forces of the fingers, as then in that direction can easily self-comply, by means of the minimized force directed to the impact surface of the workpiece that will be transferred to the impact surface of the workpiece. To gain a successful grasp, say seal of a suction cup, just sufficient for the initial picking or grasping device, say suction cup to seal up and allow the workpiece to be lifted and carried without adding undesired other forces to the workpiece, say a slim flat bag of closing, or an envelope, these forces are documented to be achievable even leaning on gravitational force onto the masses of the fingers in combination with the preloaded link principle described in this disclosure. One additional refinement of this method is to position the end-of-fingertips initial picking force generating devices at the optimal, say most other outskirts, say corners, of the accessible grasping surface of the workpiece. This can be optimized to provide the best possible stability while manoeuvring the workpiece, say to its placement, scanning or other post-processing location and/or path, still utilizing the self-compliance of the now interconnected, but still individual compliant fingers, so the force transferred to the workpiece is as gentle as possible. To be able to position the fingers and preserving the same arrangement for clamping based grasp technique (method) the joint preload or counter-pull effect of the backward pulling, possibly elastic pull-belt should be parametrized to work in the range of the positioning of the fingers desired, and the actuator should be position controllable and the transfer function between the actuator position and the fingertip position perpendicular to a plan that is ideally perpendicular to the vertical axis of the finger arrangement to the extend required for the positioning accuracy desired/required. Positional accuracy and consequently control requirements are to be set accordingly to the required positioning accuracy to achieve the desired grasping performance. In cases of bag or box grasping this method its generally not required to obtain high accuracy. In such working environment a few mm of accuracy is sufficient to gain significant benefit of this method compared to having a fix arrangement/single based relative central initial suction cup. With the appropriate transfer function this can be achieve with less expensive and mass (payload) utilizing proportional (pressure/volume/electromechanical force//mechanical predefined) positioning of the actuator. An embodiment with a proportional (volume) pneumatic is one way to achieve this, with less cost/mass/instrumental complexity than equivalent hydraulic/electro-mechanical actuator subsystem in terms of equivalent force and dynamics and positional accuracy as key performance indicators.

With feedback position and/or force control loop feedback the same arrangement can be utilized to control the forces provided at the contact between the fingertips and the workpiece surface when applying a clamping grasping technique. This may in some embodiments comprise a force sensing device, preferable directly at the fingertip. Such a feature device may also simply be utilized to observe the interaction with the workpiece, eventually utilized to limit the dynamics of the motion so the workpiece is not exposed to force to not exceeds a specific limit (limit function with respect to the manipulation of the device) or be utilized as feedback to inform the process controller that the workpiece is firmly grasped or undesirably lost, and take the appropriate action related to this feedback. The beauty of the self-compliance property is that the forces will balance out as they have the ability to comply to odd-shaped object. This is best achieved without having a shared, say initial grasping device in action or present, and individually actuated fingers. In the hybrid or compound embodiments comprising finger grasp and an initial grasp this is achievable by passivating the initial grasp, in case of a suction cup by releasing the vacuum flow and have an open channel to the ambient air, so the grasping is handled solely by the fingers, since the Newton's law of action/counter action will ensure that the clamping forces are evened out. This will allow to control minimizing the pressure/forces required to keep the workpiece safe and sufficiently clamped to conduct the desired manipulation while holding it. The same fingertip suction cup option evenly can beneficially be utilized as a supplements/substitute to having an initial grasping device at the end of the linear actuator, offering less instrumentation, as it can be used in conjunction with/ or alternatively to the initial grasping device at the end of the actuator, providing in the supplement case additional initial grasping force while initially picking the workpiece free for a subsequently clamping grasp by the same fingers. In the case of substitution, this workpiece may need to be manoeuvred and placed intermediate at a free spot/location where the fingers can be released and subsequently clamp around the now sufficiently clearance workpiece. In some setting and with the appropriate motion control the same re-grasp method can be accomplished on the fly. This is by releasing the workpiece in motion and plan path with respect to gravity, so the robot motion keeps the relative position stable enough for the workpiece to not affected significantly by gravity while "hanging in the air" until the fingers have been clamped firmly toward the workpiece again. Additionally, individual fingers can be configured with/without such fingertip suction cups, exemplary in pairs of two opposite residing fingers chains and each pair actuated separately. This enables a grasping method where in the initial grasp the suction cup features fingers are engaged to initially pick the workpiece free, subsequently when freed the second pair are actuated to generate a clamping grasp, whereafter optionally the first pair can be released and then clamped around the same workpiece adding additional holding capability. Such mixed combinations can be configurated arbitrary to achieve an application specific optimum combination of fingertip featuring within the scope of the disclosure.

Gripper pose requirements in relation to the initial grasping surface, especially in the random pick situation, where one of an unlimited varying set of workpiece shapes and sizes, surface etc., that is broadly found to be within the range of a given configuration of a gripping device of the present disclosure, is relaxed compared to the state of the art say the suction cup on a stick by this disclosure. This is due to the inherent self-compliance characteristics and the fact that the work of the initial grasping device now is limited to the reduced job of initially picking the workpiece free for a subsequently finger grasp. Devices such as suction cups have a tending unidirectional grasping force strongpoint perpendicular to the outer lips of the cup, in all cases despite the effort make to gain improved grasping capabilities to cross section twist and other forces that are challenging to the basic suction cup. A "hugging" clamping grasp is far more feasible for most objects of interest for the disclosure. By dividing the grasping into two subsequent stages and hereby limited the requirements to the initial grasping device as described, logically the compound grasping system of the present disclosure, including an initial grasping device, can service a wider range and allow higher dynamic load to the workpieces than the state of the art, and in association ease up the pose and positioning requirements of the manipulator, say robot arm, for the gripping device, that still offering less risk of hazardous collision for the device and its surroundings counting human safety, any by means of the same self-compliant nature of the pull belt/flexible chains, ease up the pose positioning to achieve equivalent and sufficient grasping.

Placing and releasing workpieces grasped is another key performance indicator for a grasping device.

Pick and drop, a well know terminology in the warehouse automation industry as well as the parcel handling of the logistics industry may be sufficient in some applications. Though in other applications its desired that workpieces are more gently and accurately placed. **In** scenarios where the placement can be conducted without restrictions in terms of the immediate surrounding this is easily accomplished as the workpiece is released as it has been positioned in its final place location where is will not be dropped but has be positioned

## Claims

1. A robotic gripping device (100) comprising a base part (1), and at least one finger (2), said finger (2) comprising an inner link (3), said inner link being rotatable relative to the base part (1) via a first joint (5a), and an outer link (4), said outer link (4) being rotatably connected by a proximal end thereof to the inner link (3) via a second joint (5), the outer link carrying an abutment part (16) at a distal end thereof, an elongated flexible tension element (6) being attached to the outer link (4) between the proximal end and the distal end thereof, a first force device (10) being provided for applying tension to the tension element (6), the robotic gripping device (100) being adapted to grip an item at a front end (18) of the robotic gripping device (100), wherein the robotic gripping device (100) is configured for the inner link (3) to be rotatable between a retracted position thereof in which the second joint (5) is positioned rear of the first joint (5) relative to the front end (18), and an extended position thereof, preferably defined by an abutment, in which extended position the second joint (5) is positioned in front of the retracted position thereof, relative to the front end (18) of the robotic gripping device (100); the outer link (4) is configured to rotate relative to the inner link (3) via the second joint (5) between an extended position of the outer link (4) remote from a longitudinal centre axis (A) and a retracted position of the outer link (4) closer to the centre axis (A); a second force device being provided for loading the outer link (4) to rotate towards the extended position thereof; and a third force device being provided for loading the inner link (3) to rotate towards the retracted position thereof.

2. A robotic gripping device (100) according to claim 1, wherein the first force device (10) comprises a linear actuator, preferably a cylinder, and more preferably a pneumatic cylinder (10a).

3. A robotic gripping device (100) according to claim 2, wherein the first force device (10) comprises a first stage (13) adapted to apply tension to the tension element (6), and optionally a second stage (14) extendable relative to the first stage (13).

4. A robotic gripping device (100) according to claim 3, wherein the first force device comprises an elastic element (12), such as a bellows, attached at a first end thereof to the first stage (13), said elastic element being attached at a second end thereof to the tension element (6).

5. A robotic gripping device (100) according to any one of claims 1 to 4, wherein the second force device comprises a second elastic member, such as a spring, urging the outer link (4) towards the extended position thereof relative to the inner link (3).

6. A robotic gripping device (100) according to any one of claims 1 to 5, wherein the third force device comprises a third elastic element, such as a spring, urging the inner link (3) towards the retracted position thereof.

7. A robotic gripping device (100) according to any one of claims 1 to 6, wherein the third force device comprises an elongated flexible second tension element (8) attached by one end thereof to the inner link (3) and attached by a second end thereof to the first force device, preferably at a point of attachment of the first tension element to the first force device.

8. A robotic gripping device (100) according to claim 7, wherein the inner link (3) comprises a distal end thereof at the second joint (5), an intermediate position at the first joint (5a), and a proximal end extending opposite the distal end relative to the intermediate position, said second tension element (8) contacting an extreme end of the proximal end or/and a rear side of the proximal end relative to the front end (18) of the robotic gripping device (100), and wherein preferably the second tension element (8) is attached to the inner link at a second intermediate position thereof between the first intermediate position and the distal end of the inner link (3).

9. A robotic gripping device (100) according to any one of claims 1 to 8, wherein a guide element (7) fixed relative to the base part (1) is provided for guiding the first tension element (6) between the outer link (4) and the first force device (10).

10. A robotic gripping device (100) according to any one of claims 2 to 9, wherein the linear actuator at a front end thereof is provided with a catching device, preferably a suction cup, further preferably attached to a vacuum source.

11. A robotic gripping device (100) according to any one of claims 1 to 10, wherein the abutment part at the distal end of the outer link comprises at least one of: A friction surface, elastic abutment pad; a friction surface, rigid abutment; and a suction cup, preferably connected to a vacuum source.

12. A method of operating a robotic gripping device (100) according to claim 1, comprising the steps of:
moving the inner link to the retracted position thereof;
approaching the robotic gripping device (100) to an article or workpiece to be gripped;
moving the inner link to the extended position thereof; and
moving the outer link towards the retracted position thereof.

13. A method according to claim 12 of operating a robotic gripping device (100) according to claim 10, comprising the steps of:
moving the inner link to the retracted position thereof and
extending the catching device of the linear actuator in front of the finger(s) of the robotic gripping device (100);
approaching the robotic gripping device (100) to an article or workpiece to be gripped;
initially grasping the article or workpiece by means of the catching device;
retracting the catching device;
moving the inner link to the extended position thereof; and
moving the outer link towards the retracted position thereof.

## Patentansprüche

1. Robotergreifvorrichtung (100), umfassend einen Basisteil (1) und mindestens einen Finger (2), wobei der Finger (2) ein inneres Verbindungsglied (3), wobei das innere Verbindungsglied über ein erstes Gelenk (5a) bezüglich des Basisteils (1) drehbar ist, und ein äußeres Verbindungsglied (4) umfasst, wobei das äußere Verbindungsglied (4) an einem proximalen Ende davon über ein zweites Gelenk (5) drehbar mit dem inneren Verbindungsglied (3) verbunden ist, wobei das äußere Verbindungsglied an einem distalen Ende davon einen Anschlagteil (16) trägt, wobei ein längliches flexibles Spannungselement (6) an dem äußeren Verbindungsglied (4) zwischen dem proximalen Ende und dem distalen Ende davon angebracht ist, wobei eine erste Kraftvorrichtung (10) dazu vorgesehen ist, das Spannungselement (6) mit Spannung zu beaufschlagen, wobei die Robotergreifvorrichtung (100) dazu ausgeführt ist, einen Gegenstand an einem vorderen Ende (18) der Robotergreifvorrichtung (100) zu ergreifen, wobei die Robotergreifvorrichtung (100) so ausgestaltet ist, dass das innere Verbindungsglied (3) zwischen einer zurückgezogenen Position davon, in der das zweite Gelenk (5) in Bezug auf das vordere Ende (18) hinter dem ersten Gelenk (5) positioniert ist, und einer ausgefahrenen Position davon, die vorzugweise durch einen Anschlag definiert ist, drehbar ist, wobei das zweite Gelenk (5) in der ausgefahrenen Position in Bezug auf das vordere Ende (18) der Robotergreifvorrichtung (100) vor der zurückgezogenen Position davon positioniert ist, wobei das äußere Verbindungsglied (4) dazu ausgestaltet ist, sich bezüglich des inneren Verbindungsglieds (3) über das zweite Gelenk (5) zwischen einer ausgefahrenen Position des äußeren Verbindungsglieds (4) von einer mittleren Längsachse (A) abgesetzt und einer zurückgezogenen Position des äußeren Verbindungsglieds (4) näher der mittleren Achse (A) zu drehen, wobei eine zweite Kraftvorrichtung zum Belasten des äußeren Verbindungsglieds (4) vorgesehen ist, damit es sich zu der ausgefahrenen Position davon hin dreht, und eine dritte Kraftvorrichtung zum Belasten des inneren Verbindungsglieds (3) vorgesehen ist, damit es sich zu der zurückgezogenen Position davon hin dreht.

2. Robotergreifvorrichtung (100) nach Anspruch 1, wobei die erste Kraftvorrichtung (10) einen Linearaktuator, vorzugsweise einen Zylinder und noch bevorzugter einen Pneumatikzylinder (10a), umfasst.

3. Robotergreifvorrichtung (100) nach Anspruch 2, wobei die erste Kraftvorrichtung (10) eine erste Stufe (13), die zur Beaufschlagung des Spannungselements (6) mit Spannung ausgeführt ist, und optional eine zweite Stufe (14) umfasst, die bezüglich der ersten Stufe (13) ausfahrbar ist.

4. Robotergreifvorrichtung (100) nach Anspruch 3, wobei die erste Kraftvorrichtung ein an einem ersten Ende davon an der ersten Stufe (13) angebrachtes elastisches Element (12) wie einen Balg umfasst, wobei das elastische Element an einem zweiten Ende davon an dem Spannungselement (6) angebracht ist.

5. Robotergreifvorrichtung (100) nach einem der Ansprüche 1 bis 4, wobei die zweite Kraftvorrichtung ein zweites elastisches Glied wie eine Feder umfasst, die bzw. das das äußere Verbindungsglied (4) bezüglich des inneren Verbindungsglieds (3) zu der ausgefahrenen Position davon hin drängt.

6. Robotergreifvorrichtung (100) nach einem der Ansprüche 1 bis 5, wobei die dritte Kraftvorrichtung ein drittes elastisches Glied wie eine Feder umfasst, die bzw. das das innere Verbindungsglied (3) zu der zurückgezogenen Position davon hin drängt.

7. Robotergreifvorrichtung (100) nach einem der Ansprüche 1 bis 6, wobei die dritte Kraftvorrichtung ein längliches flexibles zweites Spannungselement (8) umfasst, das an einem Ende davon an dem inneren Verbindungsglied (3) angebracht ist und an einem zweiten Ende davon an der ersten Kraftvorrichtung angebracht ist, vorzugsweise an einer Anbringstelle des ersten Spannungselements an der ersten Kraftvorrichtung.

8. Robotergreifvorrichtung (100) nach Anspruch 7, wobei das innere Verbindungsglied (3) ein distales Ende davon an dem zweiten Gelenk (5), eine Zwischenposition an dem ersten Gelenk (5a) und ein proximales Ende umfasst, das sich bezüglich der Zwischenposition gegenüber dem distalen Ende erstreckt, wobei das zweite Spannungselement (8) ein äußerstes Ende des proximalen Endes und/oder eine Rückseite des proximalen Endes bezüglich des vorderen Endes (18) der Robotergreifvorrichtung (100) kontaktiert, und wobei vorzugsweise das zweite Spannungselement (8) an dem inneren Verbindungsglied an einer zweiten Zwischenposition davon zwischen der ersten Zwischenposition und dem distalen Ende des inneren Verbindungsglieds (3) angebracht ist.

9. Robotergreifvorrichtung (100) nach einem der Ansprüche 1 bis 8, wobei ein bezüglich des Basisteils (1) feststehendes Führungselement (7) vorgesehen ist, um das erste Spannungselement (6) zwischen dem äußeren Verbindungsglied (4) und der ersten Kraftvorrichtung (10) zu führen.

10. Robotergreifvorrichtung (100) nach einem der Ansprüche 2 bis 9, wobei der Linearaktuator an einem vorderen Ende davon mit einer Fangvorrichtung, vorzugsweise einem Saugnapf versehen ist, der weiter bevorzugt an einer Vakuumquelle angebracht ist.

11. Robotergreifvorrichtung (100) nach einem der Ansprüche 1 bis 10, wobei der Anschlagteil an dem distalen Ende des äußeren Verbindungsglieds eine Reibfläche, elastisches Anschlagkissen und/oder eine Reibfläche, starrer Anschlag und/oder ein Saugnapf, der vorzugsweise mit einer Vakuumquelle verbunden ist, umfasst.

12. Verfahren zum Betrieb einer Robotergreifvorrichtung (100) nach Anspruch 1, umfassend die folgenden Schritte:
Bewegen des inneren Verbindungsglieds zu der zurückgezogenen Position davon,
Annähern der Robotergreifvorrichtung (100) an einen zu ergreifenden Gegenstand oder ein zu ergreifendes Werkstück,
Bewegen des inneren Verbindungsglieds zu der ausgefahrenen Position davon und
Bewegen des äußeren Verbindungsglieds zu der zurückgezogenen Position davon hin.

13. Verfahren nach Anspruch 12 zum Betrieb einer Robotergreifvorrichtung (100) nach Anspruch 10, umfassend die folgenden Schritte:
Bewegen des inneren Verbindungsglieds zu der zurückgezogenen Position davon und
Ausfahren der Fangvorrichtung des Linearaktuators vor dem/n Finger/n der Robotergreifvorrichtung (100),
Annähern der Robotergreifvorrichtung (100) an einen zu ergreifenden Gegenstand oder ein zu ergreifendes Werkstück,
anfängliches Ergreifen des Gegenstands oder Werkstücks mittels der Fangvorrichtung,
Zurückziehen der Fangvorrichtung,
Bewegen des inneren Verbindungsglieds zu der ausgefahrenen Position davon und
Bewegen des äußeren Verbindungsglieds zu der zurückgezogenen Position davon hin.

## Revendications

1. Dispositif de préhension robotique (100), comprenant une partie de base (1), et au moins un doigt (2), ledit doigt (2) comprenant une liaison intérieure (3), ladite liaison intérieure étant rotative relativement à la partie de base (1) par l'intermédiaire d'une première articulation (5a), et une liaison extérieure (4), ladite liaison extérieure (4) étant reliée de façon rotative par une extrémité proximale de celle-ci à la liaison intérieure (3) par l'intermédiaire d'une seconde articulation (5), la liaison extérieure supportant une partie de butée (16) au niveau d'une extrémité distale de celle-ci, un élément de tension flexible allongé (6) étant attaché à la liaison extérieure (4) entre l'extrémité proximale et l'extrémité distale de celle-ci, un premier dispositif de force (10) étant prévu pour appliquer une tension sur l'élément de tension (6), le dispositif de préhension robotique (100) étant adapté pour prendre un article au niveau d'une extrémité avant (18) du dispositif de préhension robotique (100), dans lequel le dispositif de préhension robotique (100) est configuré pour que la liaison intérieure (3) soit rotative entre une position rétractée de celle-ci dans laquelle la seconde articulation (5) est positionnée à l'arrière de la première articulation (5) relativement à l'extrémité avant (18), et une position étendue de celle-ci, de préférence définie par une butée, dans laquelle position étendue la seconde articulation (5) est positionnée devant la position rétractée de celle-ci, relativement à l'extrémité avant (18) du dispositif de préhension robotique (100) ; la liaison extérieure (4) est configurée pour entrer en rotation relativement à la liaison intérieure (3) par l'intermédiaire de la seconde articulation (5) entre une position étendue de la liaison extérieure (4) éloignée d'un axe central longitudinal (A) et une position rétractée de la liaison extérieure (4) plus près de l'axe central (A) ; un deuxième dispositif de force étant prévu pour charger la liaison extérieure (4) pour entrer en rotation vers la position étendue de celle-ci ; et un troisième dispositif de force étant prévu pour charger la liaison intérieure (3) pour entrer en rotation vers la position rétractée de celle-ci.

2. Dispositif de préhension robotique (100) selon la revendication 1, dans lequel le premier dispositif de force (10) comprend un actionneur linéaire, de préférence un vérin, et de façon davantage préférée un vérin pneumatique (10a).

3. Dispositif de préhension robotique (100) selon la revendication 2, dans lequel le premier dispositif de force (10) comprend un premier étage (13) adapté pour appliquer une tension sur l'élément de tension (6), et facultativement un second étage (14) extensible relativement au premier étage (13).

4. Dispositif de préhension robotique (100) selon la revendication 3, dans lequel le premier dispositif de force comprend un élément élastique (12), tel qu'un soufflet, attaché, au niveau d'une première extrémité de celui-ci, au premier étage (13), ledit élément élastique étant attaché, au niveau d'une seconde extrémité de celui-ci, à l'élément de tension (6).

5. Dispositif de préhension robotique (100) selon l'une quelconque des revendications 1 à 4, dans lequel le deuxième dispositif de force comprend un deuxième élément élastique, tel qu'un ressort, poussant la liaison extérieure (4) vers la position étendue de celle-ci relativement à la liaison intérieure (3).

6. Dispositif de préhension robotique (100) selon l'une quelconque des revendications 1 à 5, dans lequel le troisième dispositif de force comprend un troisième élément élastique, tel qu'un ressort, poussant la liaison intérieure (3) vers la position rétractée de celle-ci.

7. Dispositif de préhension robotique (100) selon l'une quelconque des revendications 1 à 6, dans lequel le troisième dispositif de force comprend un second élément de tension flexible allongé (8) attaché par une extrémité de celui-ci à la liaison intérieure (3) et attaché par une seconde extrémité de celui-ci au premier dispositif de force, de préférence au niveau d'un point d'attache du premier élément de tension au premier dispositif de force.

8. Dispositif de préhension robotique (100) selon la revendication 7, dans lequel la liaison intérieure (3) comprend une extrémité distale de celle-ci au niveau de la seconde articulation (5), une position intermédiaire au niveau de la première articulation (5a), et une extrémité proximale s'étendant opposée à l'extrémité distale relativement à la position intermédiaire, ledit second élément de tension (8) entrant en contact avec une extrémité extrême de l'extrémité proximale ou/et un côté arrière de l'extrémité proximale relativement à l'extrémité avant (18) du dispositif de préhension robotique (100), et dans lequel, de préférence, le second élément de tension (8) est attaché à la liaison intérieure au niveau d'une seconde position intermédiaire de celle-ci entre la première position intermédiaire et l'extrémité distale de la liaison intérieure (3).

9. Dispositif de préhension robotique (100) selon l'une quelconque des revendications 1 à 8, dans lequel un élément guide (7) fixé relativement à la partie de base (1) est prévu pour guider le premier élément de tension (6) entre la liaison extérieure (4) et le premier dispositif de force (10).

10. Dispositif de préhension robotique (100) selon l'une quelconque des revendications 2 à 9, dans lequel l'actionneur linéaire, au niveau d'une extrémité avant de celui-ci, est pourvu d'un dispositif de saisie, de préférence une ventouse, de préférence en outre attachée à une source de vide.

11. Dispositif de préhension robotique (100) selon l'une quelconque des revendications 1 à 10, dans lequel la partie de butée au niveau de l'extrémité distale de la liaison extérieure comprend au moins un élément parmi : une surface de frottement, un tampon de butée élastique ; une surface de frottement, une butée rigide ; et une ventouse, de préférence raccordée à une source de vide.

12. Procédé de fonctionnement d'un dispositif de préhension robotique (100) selon la revendication 1, comprenant les étapes suivantes :
le déplacement de la liaison intérieure jusqu'à la position rétractée de celle-ci ;
le rapprochement du dispositif de préhension robotique (100) d'un article ou d'une pièce devant être pris(e) ;
le déplacement de la liaison intérieure jusqu'à la position étendue de celle-ci ; et
le déplacement de la liaison extérieure vers la position rétractée de celle-ci.

13. Procédé selon la revendication 12 de fonctionnement d'un dispositif de préhension robotique (100) selon la revendication 10, comprenant les étapes suivantes :
le déplacement de la liaison intérieure jusqu'à la position rétractée de celle-ci, et
l'extension du dispositif de saisie de l'actionneur linéaire devant le(s) doigt(s) du dispositif de préhension robotique (100) ;
le rapprochement du dispositif de préhension robotique (100) d'un article ou d'une pièce devant être prise ;
l'agrippement initial de l'article ou de la pièce au moyen du dispositif de saisie ;
la rétraction du dispositif de saisie ;
le déplacement de la liaison intérieure jusqu'à la position étendue de celle-ci ; et
le déplacement de la liaison extérieure vers la position rétractée de celle-ci.
